(19) Europäisches Patentamt / European Patent Office / Office européen des brevets

(11) **EP 3 561 730 B1**

(12) **FASCICULE DE BREVET EUROPEEN**

(45) Date de publication et mention de la délivrance du brevet:
**01.06.2022 Bulletin 2022/22**

(21) Numéro de dépôt: **19170363.6**

(22) Date de dépôt: **19.04.2019**

(51) Classification Internationale des Brevets (IPC):
**G06K 19/07** *(2006.01)*    **H04B 5/00** *(2006.01)*

(52) Classification Coopérative des Brevets (CPC):
**G06K 19/0723; H04B 5/0031; H04B 5/0056**

(54) **PROCÉDÉ DE RÉGLAGE DE LA PHASE DU SIGNAL ÉMIS PAR UN OBJET CAPABLE DE COMMUNIQUER SANS CONTACT AVEC UN LECTEUR PAR MODULATION ACTIVE DE CHARGE, ET OBJET CORRESPONDANT**

REGULIERUNGSVERFAHREN DER PHASE DES SIGNALS, DAS VON EINEM OBJEKT ABGEGEBEN WIRD, DAS DURCH AKTIVE MODULIERUNG DER LADUNG KONTAKTLOS MIT EINEM LESEGERÄT KOMMUNIZIEREN KANN, UND ENTSPRECHENDES OBJEKT

METHOD FOR ADJUSTING THE PHASE OF THE SIGNAL EMITTED BY AN OBJECT CAPABLE OF CONTACTLESS COMMUNICATION WITH A READER BY ACTIVE LOAD MODULATION, AND CORRESPONDING OBJECT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.04.2018 FR 1853557**

(43) Date de publication de la demande:
**30.10.2019 Bulletin 2019/44**

(73) Titulaire: **STMicroelectronics (Rousset) SAS**
**13790 Rousset (FR)**

(72) Inventeurs:
• **TORNAMBE, Anthony**
**13790 ROUSSET (FR)**

• **CORDIER, Nicolas**
**13080 Aix-en-Provence (FR)**

(74) Mandataire: **Casalonga**
**Casalonga & Partners**
**Bayerstraße 71/73**
**80335 München (DE)**

(56) Documents cités:
**EP-A1- 2 431 925     EP-A1- 2 500 840**
**EP-A1- 3 244 351     EP-A1- 3 276 986**
**US-B1- 7 671 720**

# Description

Des modes de mise en œuvre et de réalisation de l'invention concernent la communication sans fil entre un lecteur et un objet, par exemple mais non limitativement un téléphone mobile émulé en mode carte, en particulier un objet NFC (« Near Field Communication »), et plus particulièrement la compensation d'un déphasage entre le signal émis par l'objet et celui reçu du lecteur lors d'une communication par modulation active de charge (ALM : Active Load Modulation).

La communication champ proche, plus connue par l'homme du métier sous la dénomination anglosaxonne NFC (« Near Field Communication ») est une technologie de connectivité sans fil qui permet une communication sur une courte distance, par exemple 10 cm, entre des dispositifs électroniques, comme par exemple des cartes à puce sans contact ou des téléphones mobiles émulés en mode carte, et des lecteurs.

La technologie NFC est particulièrement adaptée pour connecter tout type de dispositif utilisateur et permet des communications rapides et faciles.

Un objet sans contact est un objet capable d'échanger des informations via une antenne avec un autre objet sans contact, par exemple un lecteur, selon un protocole de communication sans contact.

Un objet NFC, qui est un objet sans contact, est un objet compatible avec la technologie NFC.

La technologie NFC est une plate-forme technologique ouverte normalisée dans la norme ISO/IEC 18092 et ISO/IEC 21481 mais incorpore de nombreuses normes déjà existantes comme par exemple les protocoles type A et type B définis dans la norme ISO-14443 qui peuvent être des protocoles de communication utilisables dans la technologie NFC.

Outre sa fonction classique de téléphone, un téléphone mobile cellulaire peut être utilisé (s'il est équipé de moyens spécifiques) pour échanger des informations avec un autre dispositif sans contact, par exemple un lecteur sans contact, en utilisant un protocole de communication sans contact utilisable dans la technologie NFC.

Ceci permet d'échanger des informations entre le lecteur sans contact et des éléments sécurisés situés dans le téléphone mobile. De nombreuses applications sont ainsi possibles comme la billetterie mobile dans les transports publics (le téléphone mobile se comporte comme un ticket de transport) ou bien le paiement mobile (le téléphone mobile se comporte comme une carte de paiement).

Lors d'une transmission d'information entre un lecteur et un objet émulé en mode étiquette ou carte, le lecteur génère un champ magnétique par l'intermédiaire de son antenne qui est généralement dans les normes classiquement utilisées, une onde sinusoïdale à 13,56MHz. La force du champ magnétique est comprise entre 0,5 et 7,5 ampères/mètre RMS (« Root Mean Square » en anglais).

Deux modes de fonctionnement sont alors possibles, un mode passif ou un mode actif.

Dans le mode passif, seul le lecteur génère le champ magnétique et l'objet, émulé en mode étiquette ou carte, est alors passif et joue toujours le rôle de la cible.

Plus précisément, l'antenne de l'objet émulant l'étiquette ou la carte module le champ généré par le lecteur.

Cette modulation est effectuée en modifiant la charge connectée aux bornes de l'antenne de l'objet.

En modifiant la charge aux bornes de l'antenne de l'objet, l'impédance de sortie de l'antenne du lecteur change en raison du couplage magnétique entre les deux antennes. Il en résulte un changement dans les amplitudes et/ou les phases des tensions et courants présents au niveau des antennes du lecteur et de l'objet.

Et, de cette façon, les informations à transmettre depuis l'objet vers le lecteur sont transmises par modulation de charge aux courants d'antenne du lecteur.

La variation de charge effectuée lors de la modulation de charge se traduit par une modulation d'amplitude et/ou de phase du signal (tension ou courant) au niveau de l'antenne du lecteur. Une copie du courant d'antenne est générée et injectée dans la chaîne de réception du lecteur où ce courant est démodulé et traité de façon à extraire les informations transmises.

Dans le mode de fonctionnement actif, le lecteur et l'objet émulé en mode carte génèrent tous les deux un champ électromagnétique. Généralement, ce mode de fonctionnement est utilisé lorsque l'objet est pourvu d'une source d'alimentation propre, par exemple une batterie, comme c'est le cas dans un téléphone mobile cellulaire qui est alors émulé en mode carte.

Chacun des dispositifs NFC transmet les données en utilisant un schéma de modulation, typiquement un schéma de modulation en amplitude du type ASK (« Amplitude Shift Keying »).

Là encore, la modulation se traduit par une modification de charge et l'on parle alors d'une communication par modulation active de charge.

Par rapport à un mode de communication passif, on obtient des distances de fonctionnement plus importantes qui peuvent aller jusqu'à 20 cm en fonction du protocole utilisé.

Par ailleurs, l'utilisation d'une modulation active de charge permet d'utiliser des antennes très petites.

Cela étant, ce type de communication par modulation active de charge pose d'autres problèmes.

En effet, durant les périodes de communication active du dispositif émulé en mode carte, le champ électromagnétique du lecteur n'est pas directement observable. Et ceci peut conduire à une réponse de l'objet émulé en mode carte non synchrone et par conséquent à un signal reçu par le lecteur présentant un décalage de phase.

Ainsi il souhaitable que, lors d'une communication par modulation active de charge, le signal transmis par le dispositif émulé en mode carte soit en phase ou en opposition de phase avec le signal reçu du lecteur de façon à avoir au niveau du lecteur et donc également au niveau du dispositif émulé en mode carte, une amplitude de modulation la plus grande possible en valeur absolue.

Un réglage de phase est généralement effectué au niveau du dispositif émulé en mode carte lors du développement du dispositif dans un environnement connu et avec un circuit d'adaptation d'impédance bien réglé.

Cependant, lors de la production du dispositif, en raison notamment des dispersions de valeurs des différents composants, l'appariement n'est pas l'appariement optimal conduisant à une dispersion dans les performances du dispositif en mode carte.

Aussi, si l'on considère deux dispositifs indépendants, à savoir le lecteur et un objet émulé en mode carte, capables de communiquer sans contact par une modulation active de charge, il existe par conséquent un besoin pour réduire au maximum voire supprimer ce décalage de phase.

Selon un mode de mise en œuvre et de réalisation, il est proposé d'effectuer une telle compensation de phase dans l'objet émulé en mode carte, de façon simple, sans nécessiter la coopération d'un lecteur, une fois pour toutes en fin de production de l'objet, c'est-à-dire avant son utilisation opérationnelle.

Selon un mode préféré de mise en œuvre et de réalisation, il est ainsi proposé un objet, capable d'être émulé en mode carte, par exemple un téléphone, une tablette, une montre connectée, sans que ces exemples ne soient limitatifs, configuré pour en fin d'assemblage et de production, effectuer un autoréglage d'un décalage de phase propre à cet objet, à partir par exemple d'une mesure du niveau de signal reçu sur les bornes d'entrée du contrôleur, par exemple un contrôleur NFC, de l'objet à la suite d'une émission d'un signal non modulé par cet objet placé en mode lecteur, et d'une table de correspondance ou d'une loi, stockée dans une mémoire de cet objet et résultant de réglages effectués sur un objet de référence présentant en particulier un appariement optimal.

Et, comme indiqué ci-avant, cet autoréglage est avantageusement effectué en fin de production et d'assemblage, sans nécessiter la présence d'un lecteur, et une fois pour toutes sans qu'il soit nécessaire ultérieurement d'effectuer à nouveau un tel réglage, en particulier lors des communications ultérieures entre l'objet et le lecteur.

La demande de brevet européen EP2500840A1 décrit un système de transfert de données par des moyens de communication radio-fréquence entre des équipements périphériques et une base centrale. La synchronisation des signaux radiofréquences émis par les moyens de communication des équipements périphériques est obtenue en recherchant la résonance du signal reçu par l'antenne par approximations successives d'un décalage de phase. La recherche du maximum de résonance est permanente et le sens du décalage de phase est déterminé en fonction de l'historique de la mesure.

Selon un aspect, il est proposé un procédé de réglage d'un objet capable de communiquer sans contact avec un lecteur par modulation active de charge, selon la revendication 1.

Ce procédé comprend

- une réalisation d'un objet de référence structurellement et fonctionnellement analogue audit objet et comportant un circuit résonant de référence accordé sur une fréquence de résonance de référence, par exemple 13,56 MHz,
- des déterminations, pour différentes fréquences appartenant à une plage de fréquences autour de la fréquence de résonance de référence, de décalages de phase de référence internes à l'objet de référence et permettant d'obtenir des décalages de phase résultants nuls ou égaux à pi à une tolérance près, entre un signal émis par l'antenne de référence de l'objet de référence vers un lecteur de test, par exemple un lecteur d'un banc de certification défini dans la norme EMVCo, et un signal reçu du lecteur de test au niveau de ladite antenne de référence.

On cherchera au maximum à obtenir pour l'objet de référence des décalages de phase résultants nuls ou égaux à pi et en pratique la tolérance peut être fixée à plus ou moins quelques degrés, par exemple 5 degrés.

Selon que le signal émis par l'antenne et le signal reçu du lecteur de test sont en opposition de phase ou en phase, l'amplitude de la modulation peut être positive ou négative.

Ainsi par exemple, obtenir des décalages de phase résultants égaux ou voisins de 0 ou de pi est équivalent à obtenir des amplitudes de modulation positives supérieures à un seuil, et de préférence les plus élevées possibles. Le seuil peut par exemple être pris égal à 95% de l'amplitude de modulation positive maximale.

Le procédé selon cet aspect comprend également une réalisation dudit objet (une production de l'objet) incluant un stockage dans une mémoire dudit objet d'au moins une indication reliant ces décalages de phase de référence à des caractéristiques de référence obtenues à partir de signaux uniquement émis par l'objet de référence.

Ces caractéristiques de référence sont obtenues à partir de signaux uniquement émis par l'objet de référence, c'est-à-dire sans présence d'un signal reçu du lecteur de test, car comme on le verra ci-après, la phase de réglage du décalage de phase propre à l'objet s'effectue sans présence d'un lecteur.

Le procédé selon cet aspect comprend donc également, à l'issue de la réalisation de l'objet, un auto réglage par ledit objet du décalage de phase interne à cet objet à partir de ladite au moins une indication stockée et d'au moins une caractéristique obtenue à partir d'un signal uniquement émis par l'objet, ladite au moins une caractéristique étant de même type que les caractéristiques de référence.

A titre préférentiel, cette caractéristique peut être un niveau de signal reçu en entrée du contrôleur, ou bien la phase du signal émis ou encore la consommation lors de l'émission.

Ainsi, pour un type d'objet donné, par exemple un type de téléphone portable, on réalise un objet de référence dont le circuit d'appariement et l'antenne ont des valeurs résistives, capacitives et inductives précisément ajustées de façon à présenter une fréquence de résonance de référence, typiquement une fréquence de 13,56 MHz dans le cas de protocoles type A ou B de la norme ISO-14443 et on détermine pour cet objet de référence des décalages de phase de référence correspondant à différentes valeurs de la fréquence autour de la fréquence de référence.

Puis, à l'issue de la réalisation (ou production) de l'objet, on fait émettre par l'objet, en l'absence de lecteur, un signal, et la mesure d'au moins une caractéristique obtenue à partir de ce signal combinée avec une indication stockée, par exemple une table ou une loi de correspondance, permet de régler le décalage de phase propre à l'objet qui va permettre d'obtenir lors des communications opérationnelles ultérieures avec un lecteur d'avoir un écart de phase limité entre le signal émis par l'objet et le signal reçu du lecteur. Et ce réglage du décalage de phase propre à l'objet ne nécessite notamment ni la connaissance de la fréquence de résonance du circuit résonant de l'objet, ni la connaissance des valeurs réelles des composants du circuit d'adaptation d'impédance.

L'objet de référence comporte en pratique un contrôleur de référence connecté à une antenne de référence par l'intermédiaire d'un circuit d'adaptation d'impédance de référence et formant ensemble ledit circuit résonant de référence.

Les décalages de phase de référence sont avantageusement des décalages de phase entre des signaux émis en sortie du contrôleur de référence et des signaux reçus en entrée du contrôleur de référence.

Ainsi on va déterminer dans l'objet de référence les décalages de phase propres au contrôleur de référence qui visent à compenser les décalages de phase dus aux composants de la voie d'émission et ceux dus aux composants de la voie de réception de l'objet de référence.

Et ainsi on réglera dans l'objet en fin de production les décalages de phase propres au contrôleur de l'objet qui vont également viser à compenser les décalages de phase dus aux composants de la voie d'émission et ceux dus aux composants de la voie de réception de cet objet.

Selon un mode préféré de mise en œuvre, les caractéristiques de référence comportent des niveaux de référence de signaux reçus résultant desdits signaux uniquement émis par l'objet de référence, et ladite au moins une caractéristique comporte un niveau d'un signal reçu résultant dudit signal uniquement émis par l'objet.

Et comme indiqué ci-avant, les niveaux de référence de signaux reçus sont par exemple les niveaux de référence de signaux reçus en entrée du contrôleur de référence et le niveau d'un signal reçu résultant dudit signal uniquement émis par l'objet est par exemple le niveau du signal reçu en entrée du contrôleur de l'objet.

L'objet de référence, tout comme l'objet produit, sont avantageusement capables de fonctionner en mode lecteur ou en mode carte.

Aussi lesdites déterminations des décalages de phase de référence peuvent-elles comporter

- un placement de l'objet de référence dans son mode carte, et pour chaque fréquence de ladite plage de fréquences, une émission par le lecteur de test d'un signal de test, par exemple une commande conforme au protocole utilisé, une réception par le lecteur de test du signal de réponse émis par l'objet de référence, et un réglage du décalage de phase de référence dans l'objet de référence de façon à obtenir au niveau du lecteur de test une amplitude de modulation supérieure en valeur absolue à un seuil, par exemple égal à 95% de l'amplitude de modulation positive maximale,
- un placement de l'objet de référence en mode lecteur, et pour chaque fréquence de ladite plage de fréquences, une émission par l'objet de référence d'un signal non modulé ayant ladite fréquence et une détermination du niveau de référence du signal reçu par le contrôleur de référence du fait de cette émission, et
- une élaboration d'une relation de correspondance entre les différentes valeurs de niveaux de référence des signaux reçus et les valeurs correspondantes de décalages de phases de référence, ladite indication stockée étant représentative de ladite relation.

Ladite indication peut comporter une table de correspondance entre les différentes valeurs de niveaux de référence des signaux reçus et les valeurs correspondantes de décalages de phases de référence.

Les inventeurs ont observé que ladite relation est une droite. Aussi ladite indication peut comporter en variante des valeurs permettant de caractériser la droite, comme par exemple la pente et un point de la droite, ou deux points de la droite.

Selon un mode de mise en œuvre, l'auto réglage par l'objet peut comprendre un placement de l'objet en mode lecteur, une émission par l'objet d'un signal non modulé à la fréquence du circuit résonant de l'objet, une détermination du niveau du signal reçu par le contrôleur de l'objet, et un réglage du décalage de phase à partir dudit niveau et de ladite indication stockée.

Tout comme l'objet de référence, ledit objet comporte un contrôleur connecté à une antenne de par l'intermédiaire d'un circuit d'adaptation d'impédance et formant ensemble un circuit résonant ayant une fréquence de résonance. Un signal émis par l'antenne de l'objet est issu d'un signal initial élaboré au sein du contrôleur, et l'auto réglage du décalage de phase comprend alors par exemple un ajustement d'un retard sur le signal initial.

Ledit objet peut être par exemple un appareil de communication, tel qu'un téléphone portable ou une tablette.

Selon un autre aspect, il est proposé un objet capable de communiquer sans contact avec un lecteur par modulation active de charge, comprenant un contrôleur connecté à une antenne par l'intermédiaire d'un circuit d'adaptation d'impédance et formant ensemble un circuit résonant ayant une fréquence de résonance, une mémoire contenant une indication résultant de l'application du procédé défini ci-avant, le contrôleur étant configuré pour effectuer un auto réglage du décalage de phase propre à cet objet conformément au procédé défini ci-avant.

Selon un autre aspect il est proposé un objet capable de communiquer sans contact avec un lecteur par modulation active de charge, ledit objet comprenant un contrôleur connecté à une antenne par l'intermédiaire d'un circuit d'adaptation d'impédance et formant ensemble un circuit résonant ayant une fréquence de résonance, le contrôleur étant configuré pour

faire émettre par l'objet, en l'absence de signal reçu d'un lecteur, un signal à la fréquence du circuit résonant de l'objet,
déterminer au moins une caractéristique obtenue à partir dudit signal uniquement émis par l'objet, et effectuer un auto réglage d'un décalage de phase interne à l'objet à partir de ladite au moins une caractéristique et d'une indication stockée dans une mémoire de l'objet et reliant des valeurs de décalages de phase de référence à des valeurs de référence de ladite au moins une caractéristique.

Selon un mode de réalisation, le décalage de phase est un décalage de phase entre un signal émis en sortie du contrôleur et un signal reçu en entrée du contrôleur.

Selon un mode de réalisation, ladite au moins une caractéristique comporte le niveau du signal reçu en entrée du contrôleur résultant dudit signal uniquement émis par l'objet.

Lorsque l'objet est capable de fonctionner en mode lecteur ou en mode carte, le contrôleur est configuré pour, dans un mode de réalisation,

placer l'objet en mode lecteur,
faire émettre par l'objet un signal non modulé à la fréquence du circuit résonant de l'objet,
déterminer le niveau du signal reçu en entrée du contrôleur de l'objet, et
effectuer un réglage du décalage de phase entre le signal émis et le signal reçu à partir dudit niveau du signal reçu et de ladite indication stockée.

Ladite indication peut comporter une table de correspondance entre différentes valeurs de niveaux de signaux reçus et des valeurs correspondantes représentatives des décalages de phases.

En variante ladite indication peut comporter des valeurs permettant de caractériser une droite représentative de l'évolution des valeurs de décalages de phases en fonction de valeurs de niveaux de signaux reçus.

Selon un mode de réalisation, le contrôleur comprend un moyen de retard ajustable disposé sur la voie d'émission des signaux et des moyens de réglage configurés pour ajuster la valeur du retard de façon à obtenir le décalage de phase souhaité.

Le contrôleur est par exemple un contrôleur compatible avec une technologie de communication champ proche (NFC).

L'objet peut être ainsi un appareil de communication, tel qu'un téléphone portable ou une tablette, ou encore une montre connectée sans que ces exemples ne soient limitatifs.

D'autres avantages et caractéristiques de l'invention apparaîtront à l'examen de la description détaillée de modes de mise en œuvre et de réalisation, nullement limitatifs, et des dessins annexés sur lesquels :

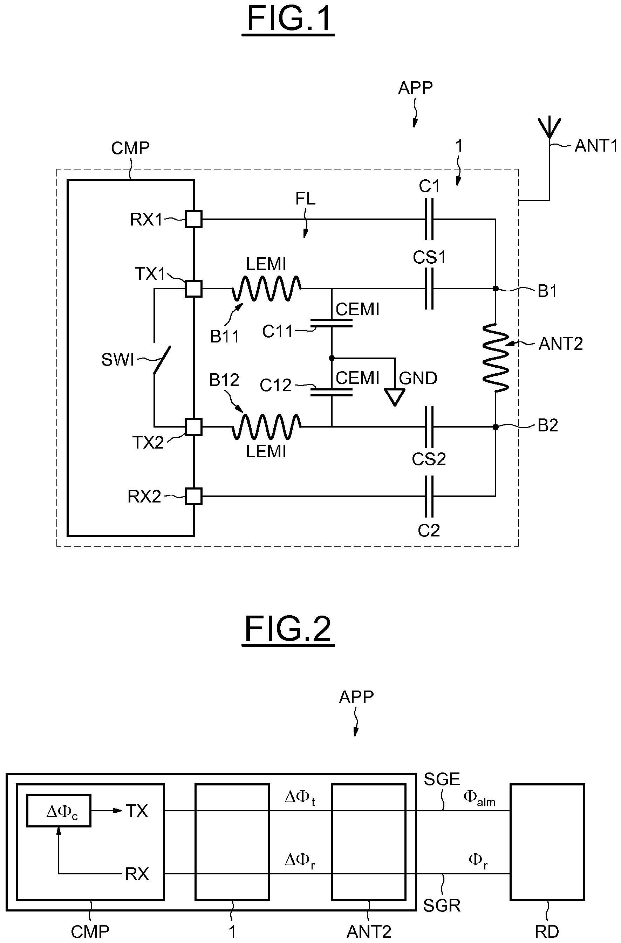

- les figures 1 à 9 illustrent différents modes de mise en œuvre et de réalisation de l'invention.

Sur la figure 1, la référence APP désigne un objet, ici un appareil de communication, par exemple un téléphone mobile cellulaire, équipé d'une antenne ANT1 pour l'établissement des communications téléphoniques.

Dans le cas présent, l'appareil APP comporte également un système NFC classique comportant un composant CMP sans contact du type NFC, par exemple un contrôleur ou microcontrôleur NFC.

L'appareil est ici capable de communiquer sans contact avec un lecteur par modulation active de charge

Le microcontrôleur CMP possède de façon classique deux contacts TX1, TX2 utilisables en mode lecteur et deux autres contacts RX1, RX2 utilisables en mode lecteur et en mode carte.

A cet égard, le composant CMP peut être équipé d'un commutateur interne SWI permettant de court-circuiter les bornes TX1 et TX2 pour un fonctionnement en mode carte ou de ne pas court-circuiter les bornes TX1 et TX2 pour autoriser un fonctionnement en mode lecteur.

Une antenne ANT2, par exemple un enroulement inductif, est utilisable pour la communication sans contact avec un dispositif externe. Une première borne B1 de cette antenne ANT2 est connectée aux contacts TX1 et RX1 tandis que la deuxième borne B2 de l'antenne ANT2 est connectée aux contacts TX2 et RX2.

Enfin, un circuit externe d'adaptation d'impédance 1 est connecté entre l'antenne ANT2 et le composant CMP.

Plus précisément, de façon classique et connue en soi, ce circuit d'adaptation d'impédance peut comporter un filtre FL destiné à filtrer les interférences électromagnétiques (filtre EMI).

Ce filtre FL est classiquement un filtre du type LC comportant ici une bobine B11 connectée en série, entre le contact TX1 et la masse GND, avec un condensateur C11.

Le filtre FL comporte également une bobine B12 connectée en série, entre le contact TX2 et la masse GND, avec un condensateur C12.

L'inductance de la bobine B11 et de la bobine B12 est égale à LEMI tandis que la valeur capacitive des condensateurs C11 et C12 est égale à CEMI.

Ces deux valeurs forment respectivement une inductance de référence et une valeur capacitive de référence pour le filtre EMI.

Ces valeurs de référence sont associées à une fréquence de coupure du filtre EMI, désigné ci-après fréquence de coupure de référence (par exemple 20 MHz pour une fréquence de porteuse de 13,56 MHz).

Et, ces valeurs de référence LEMI et CEMI sont choisies pour former un circuit résonant aux alentours de la fréquence de coupure de référence f du filtre FL.

Le circuit d'adaptation d'impédance comporte aussi les condensateurs C1, C2, CS1 et CS2.

Les condensateurs C1 et C2 forment un diviseur capacitif aux bornes des contacts RX1 et RX2.

Les condensateurs CS1 et CS2 sont quant à eux choisis pour maximiser le courant dans l'antenne ANT2 de façon à augmenter l'amplitude du champ électromagnétique.

De façon à avoir un fonctionnement optimisé, le composant CMP forme avec l'antenne ANT2 et le circuit externe de l'adaptation d'impédance un circuit résonant ayant une fréquence de résonance égale à la fréquence de porteuse, par exemple 13,56 MHz dans le cas d'un protocole de communication type A ou type B défini dans la norme ISO/IEC 14443.

Cela étant, lors de la réalisation effective du circuit externe d'adaptation d'impédance, les inductances réelles et les valeurs capacitives réelles des différents éléments de ce circuit externe d'adaptation d'impédance peuvent varier par rapport aux valeurs théoriques en raison notamment de la dispersion technologique des bobines et condensateurs utilisés.

En utilisation normale, le lecteur émet un signal SGR qui présente une phase $\phi_r$. L'appareil de communication en mode carte répond aux commandes du lecteur par un signal SGE à la même fréquence présentant la phase $\phi_{alm}$ qui est égale à :

$$\phi_{alm} = \phi_r + \Delta\phi_r + \Delta\phi_c + \Delta\phi_t$$

Il y a donc un décalage de phase égal à $\phi_{alm}$-$\phi_r$ entre le signal émis par l'objet et le signal reçu du lecteur.

Le décalage de phase $\Delta\phi_t$ est dû aux composants (résistances, condensateurs, inductances) de la voie d'émission tandis que le décalage de phase $\Delta\phi_r$ est dû aux composants (résistances, condensateurs, inductances) de la voie de réception.

$\Delta\phi_r$ et $\Delta\phi_t$ varient d'un appareil de communication à l'autre à cause des tolérances des composants et de l'antenne ANT2. Les tolérances de l'antenne dépendent des tolérances mécaniques de l'antenne mais aussi des tolérances mécaniques de l'assemblage du fait de la présence de parties métalliques à proximité de l'antenne.

$\Delta\phi_c$ est un paramètre configurable dans le composant CMP stocké en mémoire.

Un paramètre unique pour toute la production des appareils n'est pas suffisant à cause des tolérances mentionnées ci-dessus.

A titre indicatif, les variations de phase induites par ces tolérances peuvent atteindre 120 degrés soit plus ou moins 60 degrés pour la phase $\phi_{alm}$.

L'amplitude LMA de la modulation de charge générée par un appareil APP décalé de 60 degrés est réduite à la moitié de la valeur maximale obtenue avec un appareil bien calé et cela introduit des problèmes d'interopérabilité avec certains lecteurs.

En outre, l'infrastructure de lecteurs sans contact n'est pas renouvelée fréquemment, en particulier dans le domaine des transports et l'appareil de communication doit fonctionner avec des lecteurs anciens aux performances limitées (architecture de réception simple à détection d'enveloppe contrairement aux architectures ayant deux voies I et Q en quadrature de phase).

En outre, ces lecteurs ont été conçus à l'origine pour fonctionner avec des cartes sans contact utilisant une modulation de charge passive.

Selon un aspect de l'invention, il est proposé une phase d'autoréglage en fin de production, ou phase d'étalonnage, visant à déterminer la compensation de phase $\Delta\phi_c$ pour chaque appareil APP produit de manière à ramener la variation de la phase $\phi_{alm}$ par exemple à plus ou moins 15 degrés sur l'ensemble de la production.

Et, comme on le verra ci-après, cet autoréglage permet de déterminer $\Delta\phi_c$ sans l'utilisation d'un lecteur de test.

En effet, comme les entrées et sorties RX1, RX2, TX1, TX2 du composant CMP sont connectées au même circuit d'adaptation et à la même antenne présents dans l'appareil de communication, on peut déterminer cette compensation $\Delta\phi_c$ en mesurant les caractéristiques d'un signal émis spontanément par l'appareil de communication au cours de cette phase d'autoréglage, et ce sans qu'il soit nécessaire d'avoir un signal reçu du lecteur et donc sans présence d'un lecteur.

En fonction de ces caractéristiques mesurées, on détermine alors pour chaque appareil l'erreur $\Delta\phi_c$ via une loi ou une table de façon à compenser les variations de $\Delta\phi_r$ et $\Delta\phi_t$ pour contenir la phase du signal $\phi_{alm}$ dans une plage de phase limitée.

Cette loi ou cette table qui est stockée dans la mémoire de l'appareil au cours de la production, avant la phase d'autoréglage ou d'autotest, est obtenue, comme on va le voir plus en détails ci-après, à l'aide d'un appareil ou objet de référence et d'un lecteur de test, par exemple le lecteur d'un banc de test conforme à la norme EMVCo.

L'objet ou appareil de référence est un appareil structurellement et fonctionnellement analogue à l'appareil APP produit mais présentant en particulier un circuit d'adaptation d'impédance et une antenne réalisés avec des composants dont on maîtrise parfaitement les valeurs ce qui permet d'avoir pour le circuit résonant formé par l'antenne et le circuit d'adaptation, une fréquence de résonance de référence typiquement égale à la fréquence de la porteuse, par exemple 13,56 MHz.

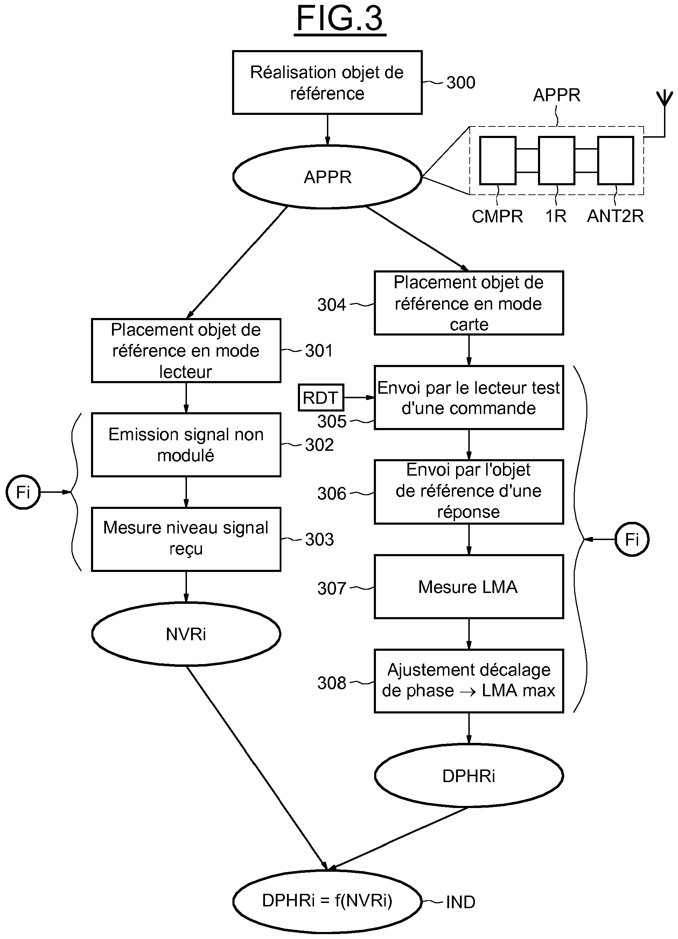

On se réfère maintenant plus particulièrement aux figures 3 à 6 pour illustrer un exemple non limitatif de mode de mise en œuvre du procédé selon l'invention concernant plus particulièrement l'élaboration de la loi ou de la table qui va être stockée dans la mémoire de l'objet en vue de son autotest ou autoréglage.

Et dans l'exemple qui va être décrit ci-après, la caractéristique du signal émis qui va être prise en compte est le niveau du signal reçu en entrée du contrôleur et résultant de l'émission du signal au niveau de l'antenne, lorsque l'objet est placé en mode lecteur.

Comme indiqué ci-avant, cette élaboration de la loi ou de la table fait intervenir l'objet de référence.

Plus précisément, on va dans cet exemple préférentiel, élaborer en utilisant cet objet de référence une relation de correspondance entre différentes valeurs de niveaux de référence de signaux reçus en entrée du contrôleur de référence et des valeurs correspondantes de décalages de phases de référence, et stocker une indication (la loi ou la table) représentative de ladite relation

Dans une étape 300, on réalise l'objet ou appareil de référence APPR comportant un contrôleur de référence CMPR, un circuit d'adaptation d'impédance de référence 1R et une antenne de référence ANT2R.

Puis, on place (étape 301) l'objet de référence en mode lecteur.

Et, pour chaque fréquence Fi appartenant à une plage de fréquences autour de la fréquence de résonance de référence (par exemple 13,56 MHz) on fait émettre par l'objet de référence un signal non modulé.

Ce signal non modulé (étape 302) étant transmis au niveau de l'antenne de l'appareil de référence, celle-ci va capter un niveau de signal reçu qui va être mesuré (étape 303) au niveau des bornes d'entrée RX1, RX2 du composant CMP (contrôleur NFC) de l'objet de référence.

Ceci est effectué de façon classique en utilisant par exemple un convertisseur analogique numérique intégré dans le composant CMP.

On obtient donc un niveau NVRi de signal reçu en entrée du composant CMP, ce niveau NVRi étant associé à la fréquence Fi.

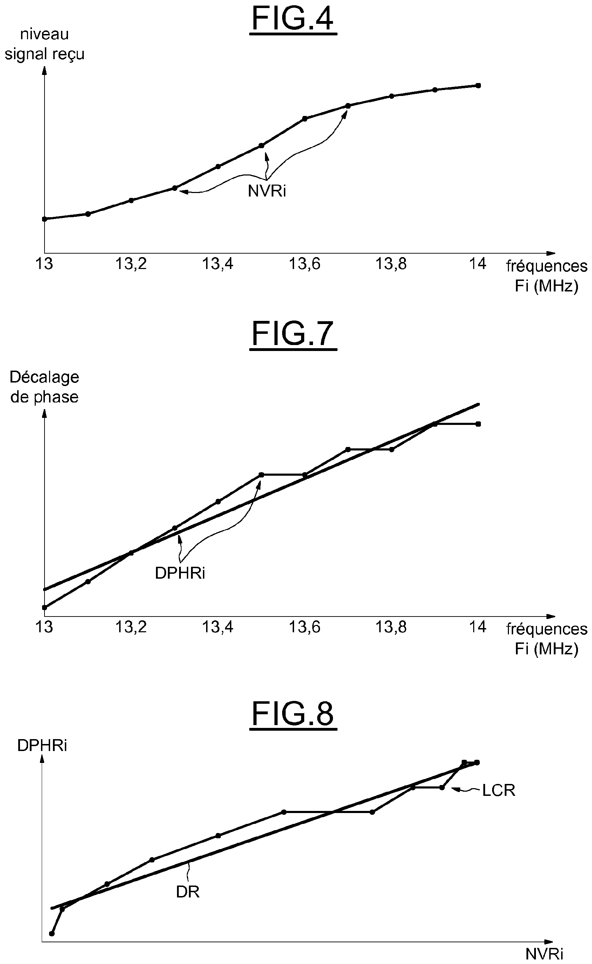

En répétant cette opération pour les fréquences Fi de la plage de fréquences, on obtient donc, comme illustré sur la figure 4, un ensemble de niveaux NVRi, chaque niveau NVRi étant associé à une fréquence Fi.

Une autre opération vise à déterminer pour chaque fréquence Fi, le décalage de phase DPHRi (correspondant à la compensation $\Delta\phi_c$) propre au contrôleur de référence, de façon à obtenir une amplitude de modulation LMA supérieure à un seuil, typiquement la plus élevée possible en valeur absolue.

Ces opérations, illustrées par les étapes (304) à (308) sur la figure 3, peuvent être réalisées avant ou après les étapes (301) à (303).

On place donc cette fois-ci l'objet ou appareil de référence en mode carte (étape 304).

Puis, on fait envoyer par le lecteur de test RDT, par exemple un lecteur de test d'un banc de test EMVCo, une commande (étape 305).

L'objet de référence étant en mode carte, il va répondre à cette commande par l'envoi d'une réponse (étape 306).

La commande est déphasée par rapport à la réponse.

On mesure alors au niveau du lecteur du banc de test l'amplitude de modulation LMA.

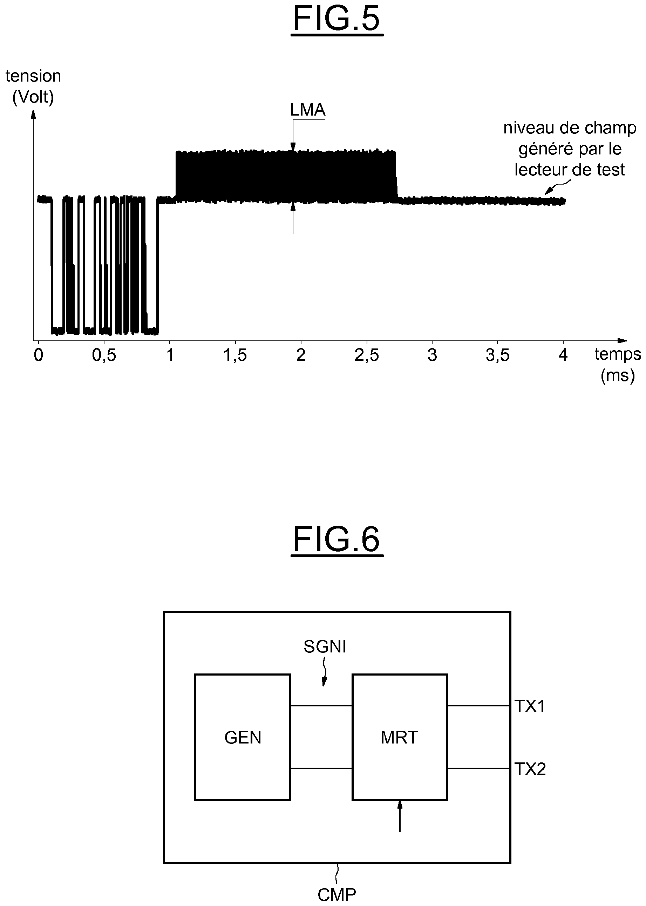

Ceci est illustré sur la figure 5.

Plus précisément, l'amplitude de modulation LMA, correspond à la différence de tension par rapport au niveau du champ généré par le lecteur test.

Lorsque le signal émis par l'objet et le signal émis par le lecteur sont en phase, cette amplitude est positive tandis qu'elle est négative lorsque ces deux signaux sont en opposition de phase.

On règle alors dans l'appareil de référence, le déphasage DPHRi de façon à obtenir un niveau d'amplitude LMA, par exemple un niveau positif, supérieur à un seuil. Ce seuil peut être par exemple égal à 95% du niveau maximal.

Cela étant, en pratique, on cherchera à obtenir un décalage de phase DPHRi conduisant au niveau maximal de l'amplitude LMA.

En pratique, le réglage du déphasage, comme illustré sur la figure 6, en ajustant la valeur de retard de moyens de retard MRT disposés sur la voie d'émission du composant CMP et visant à retarder le signal initial généré par des moyens GEN de génération de la réponse.

Il y a en effet une relation directe entre la valeur du retard et la valeur du décalage de phase de référence DPHRi.

On répète les étapes (305) à (308) pour toutes les fréquences Fi de la plage de fréquences et on obtient donc, comme illustré sur la figure 7, un ensemble de décalages de phase de référence DPHRi associés respectivement aux différentes fréquences Fi.

A partir de là, on peut, comme illustré sur la figure 8, établir une relation de correspondance entre les différents décalages de phase de référence DPHRi et les différents niveaux de signaux reçus NVRi.

La relation de correspondance LCR peut alors être par exemple approximée par une droite DR.

A partir de là, on peut définir une indication permettant de définir cette relation de correspondance LCR (figure 8).

Cette indication IND (figure 3) peut être une table de correspondance comportant tous les couples de points DPHRi, NVRi correspondant respectivement aux fréquences Fi. En variante, il est possible de prévoir comme indication IND, des paramètres permettant de caractériser la fonction DPHRi=f(NVRi), ici la droite DR, comme par exemple la pente de la droite DR et un point de cette droite, ou alors deux points de cette droite DR.

Bien entendu, il serait possible de remplacer les valeurs de décalage de phase de référence DPHRi par les valeurs de retard correspondants ayant permis d'obtenir ces décalages de phase de référence.

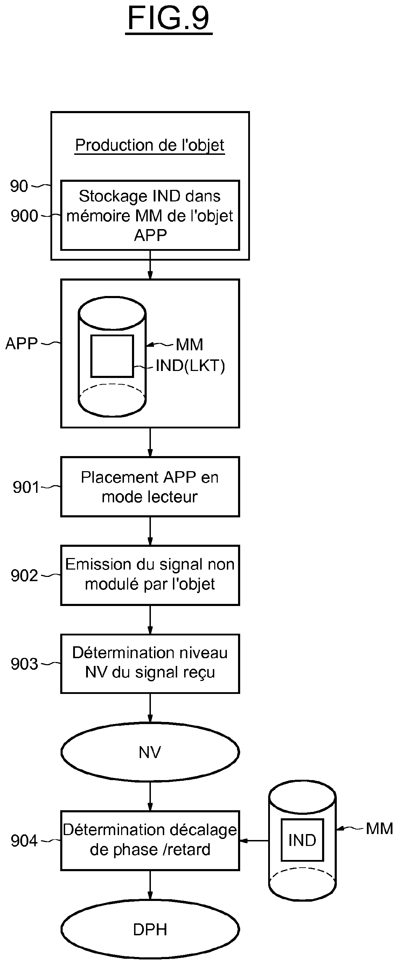

On se réfère maintenant plus particulièrement à la figure 9 qui décrit en particulier la phase d'autoréglage ou d'autotest d'un produit ayant été produit sur une ligne de production.

Dans l'étape (90), qui représente globalement les étapes de production de l'objet comportant en particulier l'assemblage des différents composants, on stocke dans une mémoire MM de l'objet APP, l'indication obtenue à l'issue des étapes (303) et (308).

Et l'on obtient en fin de ligne de production un appareil APP comportant dans sa mémoire MM ladite indication, par exemple la table de correspondance LKT (Look-up table).

On place ensuite l'appareil APP en mode lecteur (étape 901) et l'on fait émettre par l'appareil APP un signal non modulé (étape 902).

On détermine alors d'une façon analogue à ce qui a été décrit ici avant, le niveau NV du signal reçu en entrée du composant CMP étape (903).

Puis, à partir de cette valeur NV et de l'indication IND, ici la table de correspondance LKT, stockée dans la mémoire, on peut en déterminer le décalage de phase DPH, et par conséquent le retard à appliquer sur les moyens de retard de l'appareil APP.

L'appareil à ce stade a donc été étalonné et ce sans qu'il soit nécessaire d'utiliser un quelconque lecteur ni un quelconque signal provenant d'un lecteur.

La mesure d'une caractéristique obtenue à partir du seul signal émis par l'objet permet avec l'indication stockée en mémoire d'effectuer le réglage de décalage de phase.

Et bien que cette caractéristique ait été décrite ci-avant comme étant un niveau de signal reçu en entrée du contrôleur, d'autres caractéristiques sont possibles comme par exemple la phase du signal émis ou encore la consommation lors de l'émission.

Et cet étalonnage est effectué une seule fois ce qui dispense de le refaire à chaque communication opérationnelle ultérieure avec un lecteur.

## Revendications

1. Procédé de réglage d'un objet capable de communiquer sans contact avec un lecteur par modulation active de charge, comprenant

   - une réalisation (300) d'un objet de référence (APPR) structurellement et fonctionnellement analogue audit objet (APP) et comportant un circuit résonant de référence accordé sur une fréquence de résonance de référence,
   - des déterminations, pour différentes fréquences appartenant à une plage de fréquences autour de la fréquence de résonance de référence, de décalages de phase de référence (DPHRi) internes à l'objet de référence et permettant d'obtenir des décalages de phase résultants nuls ou égaux à pi à une tolérance près, entre un signal émis par l'antenne de référence de l'objet de référence (APPR) vers un lecteur de test et un signal reçu du lecteur de test au niveau de ladite antenne de référence ,
   - une réalisation (90) dudit objet (APP) incluant un stockage (900) dans une mémoire (MM) dudit objet d'au moins une indication (IND) reliant ces décalages de phase de référence à des caractéristiques de référence obtenues à partir de signaux uniquement émis par l'objet de référence, et
   - à l'issue de la réalisation de l'objet, un auto réglage (901-904) par ledit objet du décalage de phase interne à cet objet à partir de ladite au moins une indication stockée et d'au moins une caractéristique obtenue à partir d'un signal uniquement émis par l'objet, ladite au moins une caractéristique étant de même type que les caractéristiques de référence.

2. Procédé selon la revendication 1, dans lequel l'objet de référence comporte un contrôleur de référence connecté à une antenne de référence par l'intermédiaire d'un circuit d'adaptation d'impédance de référence et formant ensemble ledit circuit résonant de référence, et les décalages de phase de référence (DPHRi) sont des décalages de phase entre des signaux émis en sortie du contrôleur de référence et des signaux reçus en entrée du contrôleur de référence.

3. Procédé selon la revendication 1 ou 2, dans lequel les caractéristiques de référence comportent des niveaux de référence (NVRi) de signaux reçus résultant desdits signaux uniquement émis par l'objet de référence, et ladite au moins une caractéristique comporte un niveau (NV) d'un signal reçu résultant dudit signal uniquement émis par l'objet.

4. Procédé selon la revendication 3, dans lequel les niveaux de référence (NVRi) de signaux reçus sont les niveaux de référence de signaux reçus en entrée du contrôleur de référence et le niveau (NV) d'un signal reçu résultant dudit signal uniquement émis par l'objet est le niveau du signal reçu en entrée du contrôleur de l'objet.

**5.** Procédé selon la revendication 4, dans lequel l'objet de référence est capable de fonctionner en mode lecteur ou en mode carte, lesdites déterminations des décalages de phase de référence comportent

- un placement (304) de l'objet de référence dans son mode carte, et pour chaque fréquence (Fi) de ladite plage de fréquences, une émission (305) par le lecteur de test d'un signal de test, une réception par le lecteur de test du signal de réponse émis par l'objet de référence, et un réglage (308) du décalage de phase dans l'objet de référence de façon à obtenir au niveau du lecteur de test une amplitude de modulation supérieure en valeur absolue audit seuil,
- un placement (301) de l'objet de référence en mode lecteur, et pour chaque fréquence (Fi) de ladite plage de fréquences, une émission (302) par l'objet de référence d'un signal non modulé ayant ladite fréquence et une détermination (303) du niveau de référence du signal reçu par le contrôleur de référence du fait de cette émission, et
- une élaboration (310) d'une relation de correspondance entre les différentes valeurs de niveaux de référence des signaux reçus et les valeurs correspondantes de décalages de phases de référence, ladite indication stockée étant représentative de ladite relation.

**6.** Procédé selon la revendication 5, dans lequel ladite indication comporte une table de correspondance entre les différentes valeurs de niveaux de référence des signaux reçus et les valeurs correspondantes de décalages de phases de référence.

**7.** Procédé selon la revendication 5, dans lequel ladite relation est une droite, et ladite indication comporte des valeurs permettant de caractériser la droite.

**8.** Procédé selon l'une des revendications 4 à 7, dans lequel l'objet est capable de fonctionner en mode lecteur ou en mode carte, l'auto réglage par l'objet comprend un placement (901) de l'objet en mode lecteur, une émission (902) par l'objet d'un signal non modulé à la fréquence du circuit résonant de l'objet, une détermination (903) du niveau du signal reçu par le contrôleur de l'objet, et un réglage (904) du décalage de phase à partir dudit niveau et de ladite indication stockée.

**9.** Procédé selon l'une des revendications précédentes, dans lequel ledit objet comporte un contrôleur connecté à une antenne de par l'intermédiaire d'un circuit d'adaptation d'impédance et formant ensemble un circuit résonant ayant une fréquence de résonance, un signal émis par l'antenne de l'objet étant issu d'un signal initial élaboré au sein du contrôleur, et l'auto réglage du décalage de phase comprend un ajustement d'un retard sur le signal initial.

**10.** Procédé selon l'une des revendications précédentes, dans lequel ledit objet est un appareil de communication, tel qu'un téléphone portable ou une tablette.

**11.** Objet capable de communiquer sans contact avec un lecteur par modulation active de charge, comprenant un contrôleur (CMP) connecté à une antenne par l'intermédiaire d'un circuit d'adaptation d'impédance et formant ensemble un circuit résonant ayant une fréquence de résonance, une mémoire contenant une indication résultant de l'application du procédé selon l'une de revendications 1 à 10, le contrôleur étant configuré pour effectuer un auto réglage du décalage de phase propre à cet objet conformément au procédé selon l'une des revendications 1 à 10.

**12.** Objet capable de communiquer sans contact avec un lecteur par modulation active de charge, ledit objet (APP) comprenant un contrôleur (CMP) connecté à une antenne (ANT2) par l'intermédiaire d'un circuit d'adaptation d'impédance (1) et formant ensemble un circuit résonant ayant une fréquence de résonance, l'objet étant **caractérisé en ce que** le contrôleur est configuré pour faire émettre par l'objet, en l'absence de signal reçu d'un lecteur, un signal à la fréquence du circuit résonant de l'objet, à déterminer au moins une caractéristique (NV) obtenue à partir dudit signal uniquement émis par l'objet, et effectuer un auto réglage d'un décalage de phase (DPH) interne à l'objet à partir de ladite au moins une caractéristique et d'une indication (IND) stockée dans une mémoire de l'objet et reliant des valeurs de décalages de phase de référence à des valeurs de référence de ladite au moins une caractéristique.

**13.** Objet selon la revendication 12, dans lequel le décalage de phase (DPH) est un décalage de phase entre un signal émis en sortie du contrôleur et un signal reçu en entrée du contrôleur.

**14.** Objet selon la revendication 12, dans lequel ladite au moins une caractéristique comporte le niveau (NV) du signal reçu en entrée du contrôleur résultant dudit signal uniquement émis par l'objet.

**15.** Objet selon la revendication 14, capable de fonctionner en mode lecteur ou en mode carte et dans lequel le contrôleur (CMP) est configuré pour placer l'objet en mode lecteur, faire émettre par l'objet un signal non modulé à la fréquence du circuit résonant de l'objet, à déterminer le niveau du signal reçu en entrée du contrôleur de l'objet, et effectuer un réglage du décalage de phase entre le signal émis et le signal reçu à partir dudit niveau du signal reçu et de ladite indication stockée.

16. Objet selon la revendication 15, dans lequel ladite indication (IND) comporte une table de correspondance entre différentes valeurs de niveaux de signaux reçus et des valeurs correspondantes représentatives des décalages de phases.

17. Objet selon la revendication 15, dans lequel ladite indication (IND) comporte des paramètres permettant de caractériser une droite représentative de l'évolution des valeurs de décalages de phases en fonction de valeurs de niveaux de signaux reçus.

18. Objet selon l'une des revendications 11 à 17, dans lequel le contrôleur comprend un moyen de retard ajustable (MRT) disposé sur la voie d'émission des signaux et des moyens de réglage configurés pour ajuster la valeur du retard de façon à obtenir le décalage de phase souhaité.

19. Objet selon l'une des revendications 11 à 18, dans lequel le contrôleur (CMP) est un contrôleur compatible avec une technologie de communication champ proche.

20. Objet selon l'une des revendications 11 à 19, étant un appareil de communication, tel qu'un téléphone portable ou une tablette.

**Patentansprüche**

1. Verfahren zur Regulierung eines Objekts, das in der Lage ist, berührungslos mit einem Lesegerät durch aktive Belastungsmodulation zu kommunizieren, umfassend

    - eine Realisierung (300) eines Referenzobjekts (APPR), das strukturell und funktionell analog zum Objekt (APP) ist und einen Referenzresonanzkreis aufweist, der auf eine Referenzresonanzfrequenz abgestimmt ist,
    - Bestimmungen, für verschiedene Frequenzen, die zu einem Frequenzbereich in der Nähe der Referenzresonanzfrequenz gehören, von Referenzphasenverschiebungen (DPHRi) innerhalb des Referenzobjekts, und zu ermöglichen, Phasenverschiebungen gleich null oder gleich Pi bis auf eine Toleranz zu erhalten, zwischen einem durch die Referenzantenne des Referenzobjekts (APPR) an ein Testlesegerät gesendeten Signal und einem durch das Testlesegerät auf der Ebene der Referenzantenne empfangenen Signal,
    - eine Realisierung (90) des Objekts (APP), die eine Speicherung (900) in einem Speicher (MM) des Objekts von mindestens einer Angabe (IND) einschließt, die diese Referenzphasenverschiebungen mit Referenzmerkmalen verknüpft, die ausgehend von Signalen erhalten werden, die nur vom Referenzobjekt gesendet werden, und
    - am Ende der Realisierung des Objekts, eine Selbstanpassung (901-904) durch das Objekt der Phasenverschiebung innerhalb dieses Objekts ausgehend von der mindestens einen gespeicherten Angabe und von dem mindestens einen Merkmal, das ausgehend von einem Signal erhalten wurde, das nur vom Objekt gesendet wird, wobei das mindestens eine Merkmal vom gleichen Typ wie die Referenzmerkmale ist.

2. Verfahren nach Anspruch 1, wobei das Referenzobjekt einen Referenzregler aufweist, der über eine Referenz-Impedanzanpassungs-Schaltung mit einer Referenzantenne verbunden ist und die zusammen den Referenzresonanzkreis bilden, und die Referenzphasenverschiebungen (DPHRi) Phasenverschiebungen zwischen am Ausgang des Referenzreglers gesendeten Signalen und am Eingang des Referenzreglers empfangenen Signalen sind.

3. Verfahren nach Anspruch 1 oder 2, wobei die Referenzmerkmale Referenzpegel (NVRi) von empfangenen Signalen aufweisen, die aus den Signalen resultieren, die nur vom Referenzobjekt gesendet werden, und das mindestens eine Merkmal einen Pegel (NV) eines empfangenen Signals aufweist, das aus dem Signal resultiert, das nur vom Objekt gesendet wird.

4. Verfahren nach Anspruch 3, wobei die Referenzpegel (NVRi) von empfangenen Signalen die Referenzpegel von am Eingang des Referenzreglers empfangenen Signalen sind und der Pegel (NV) eines empfangenen Signals, das aus dem Signal resultiert, das nur vom Objekt gesendet wird, ist der Pegel des Signals, das am Eingang des Reglers des Objekts empfangen wird.

5. Verfahren nach Anspruch 4, wobei das Referenzobjekt in der Lage ist, im Lesemodus oder im Kartenmodus zu funktionieren, wobei die Bestimmungen der Referenzphasenverschiebungen aufweisen

    - eine Platzierung (304) des Referenzobjekts in seinen Kartenmodus und, für jede Frequenz (Fi) des Frequenzbereichs, eine Emission (305) eines Testsignals durch das Testlesegerät, einen Empfang des Bereitschaftssignals, das vom Referenzobjekt gesendet wird, durch das Testlesegerät, und eine Anpassung (308) der Phasenverschiebung im Referenzobjekt, um auf der Ebene des Testlesegeräts eine im Absolutwert höhere Modulationsamplitude am Schwellenwert zu erhalten,
- eine Platzierung (301) des Referenzobjekts in den Lesemodus und, für jede Frequenz (Fi) des Frequenzbereichs, eine Emission (302) eines unmodulierten Signals, das die Frequenz hat, durch das Referenzobjekt und eine Bestimmung (303) des Referenzpegels des Signals, das vom Referenzregler als Ergebnis dieser Emission empfangen wurde, und
- eine Ausarbeitung (310) einer Entsprechungsbeziehung zwischen den verschiedenen Werten von Referenzpegeln der empfangenen Signale und den entsprechenden Werten von Referenzphasenverschiebungen, wobei die gespeicherte Angabe repräsentativ für die Beziehung ist.

6. Verfahren nach Anspruch 5, wobei die Angabe eine Tabelle von Entsprechungen zwischen den verschiedenen Werten von Referenzpegeln der empfangenen Signale und den entsprechenden Werten von Referenzphasenverschiebungen aufweist.

7. Verfahren nach Anspruch 5, wobei die Beziehung eine Gerade ist und die Angabe Werte aufweist, die es ermöglichen, die Gerade zu kennzeichnen.

8. Verfahren nach einem der Ansprüche 4 bis 7, wobei das Objekt in der Lage ist, im Lesemodus oder im Kartenmodus zu funktionieren, die Selbstanpassung durch das Objekt umfasst eine Platzierung (901) des Objekts im Lesemodus, eine Emission (902) durch das Objekt eines unmodulierten Signals mit der Frequenz des Resonanzkreises des Objekts, eine Bestimmung (903) des Pegels des vom Regler des Objekts empfangenen Signals und eine Anpassung (904) der Phasenverschiebung ausgehend vom Pegel und der gespeicherten Angabe.

9. Verfahren nach einem der vorhergehenden Ansprüche, wobei das Objekt einen Regler aufweist, der über eine Impedanzanpassungs-Schaltung mit einer Antenne verbunden ist und die zusammen einen Resonanzkreis mit einer Resonanzfrequenz bilden, wobei ein von der Antenne des Objekts gesendetes Signal von einem ursprünglichen Signal ausgegangen ist, das im Regler entwickelt wird, und die Selbstanpassung der Phasenverschiebung eine Einstellung einer Verzögerung des ursprünglichen Signals umfasst.

10. Verfahren nach einem der vorhergehenden Ansprüche, wobei das Objekt ein Kommunikationsgerät ist, wie beispielsweise ein Mobiltelefon oder ein Tablet.

11. Objekt, das in der Lage ist, berührungslos mit einem Lesegerät durch aktive Belastungsmodulation zu kommunizieren, einen Regler (CMP) umfassend, der über eine Impedanzanpassungs-Schaltung mit einer Antenne verbunden ist und die zusammen einen Resonanzkreis mit einer Resonanzfrequenz bilden, und einen Speicher, der eine Angabe enthält, die aus der Anwendung des Verfahrens nach einem der Ansprüche 1 bis 10 resultiert, wobei der Regler dazu konfiguriert ist, eine Selbstanpassung der Phasenverschiebung durchzuführen, die spezifisch für dieses Objekt ist, gemäß dem Verfahren nach einem der Ansprüche 1 bis 10.

12. Objekt, das in der Lage ist, berührungslos mit einem Lesegerät durch aktive Belastungsmodulation zu kommunizieren, wobei das Objekt (APP) einen Regler (CMP) umfasst, der über eine Impedanzanpassungs-Schaltung (1) mit einer Antenne (ANT2) verbunden ist und die zusammen einen Resonanzkreis mit einer Resonanzfrequenz bilden, wobei das Objekt **dadurch gekennzeichnet ist, dass** der Regler konfiguriert ist, um zu bewirken, dass das Objekt, bei Fehlen eines von einem Lesegerät empfangenen Signals, ein Signal mit der Frequenz des Resonanzkreises des Objekts aussendet, um mindestens ein Merkmal (NV) zu bestimmen, das ausgehend von einem Signal erhalten wurde, das nur vom Objekt gesendet wird, und Durchführen einer Selbstanpassung einer Phasenverschiebung (DPH) innerhalb des Objekts ausgehend vom mindestens einen Merkmal und einer Angabe (IND), die in einem Speicher des Objekts gespeichert ist und Verknüpfen von Referenz-Phasenverschiebungs-Werten mit Referenzwerten des mindestens einen Merkmals.

13. Objekt nach Anspruch 12, wobei die Phasenverschiebung (DPH) eine Phasenverschiebung zwischen einem am Ausgang des Reglers gesendeten Signal und einem am Eingang des Reglers empfangenen Signal ist.

14. Objekt nach Anspruch 12, wobei das mindestens eine Merkmal den Pegel (NV) des am Eingang des Reglers empfangenen Signals aufweist, das aus dem Signal resultiert, das nur vom Objekt gesendet wird.

15. Objekt nach Anspruch 14, das in der Lage ist, im Lesemodus oder im Kartenmodus zu funktionieren und wobei der Regler (CMP) konfiguriert ist, um das Objekt in den Lesemodus zu platzieren, zu bewirken, dass das Objekt ein unmoduliertes Signal mit der Frequenz des Resonanzkreises des Objekts sendet, um den Pegel des am Eingang des Reglers des Objekts empfangenen Signals zu bestimmen, und um eine Anpassung der Phasenverschiebung zwischen dem gesendeten Signal und dem empfangenen Signal durchzuführen, ausgehend vom Pegel des empfangenen Signals und der gespeicherten Angabe.

16. Objekt nach Anspruch 15, wobei die Angabe (IND) eine Tabelle von Entsprechungen zwischen verschiedenen Werten von empfangenen Signalpegeln und entsprechenden für die Phasenverschiebungen repräsentativen Werten aufweist.

17. Objekt nach Anspruch 15, wobei die Angabe (IND) Parameter aufweist, die es ermöglichen, eine Gerade zu kennzeichnen, die repräsentativ für die Entwicklung der Phasenverschiebungswerte ist, abhängig von empfangenen Signalpegelwerten.

18. Objekt nach einem der Ansprüche 11 bis 17, wobei der Regler ein einstellbares Verzögerungsmittel (MRT) umfasst, das auf dem Emissionspfad der Signale angeordnet ist, und Anpassungsmittel, die konfiguriert sind, um den Wert der Verzögerung einzustellen, um die gewünschte Phasenverschiebung zu erhalten.

19. Objekt nach einem der Ansprüche 11 bis 18, wobei der Regler (CMP) ein mit einer Nahfeld-Kommunikationstechnologie kompatibler Regler ist.

20. Objekt nach einem der Ansprüche 11 bis 19, das ein Kommunikationsgerät ist, wie beispielsweise ein Mobiltelefon oder ein Tablet.


**Claims**

1. A method for setting an object capable of contactless communication with a reader by active load modulation, comprising

   - a production (300) of a reference object (APPR) which is structurally and functionally similar to said object (APP) and including a reference resonant circuit tuned to a reference resonance frequency,
   - determinations, for different frequencies belonging to a frequency range around the reference resonance frequency, of reference phase shifts (DPHRi) internal to the reference object and allowing to obtain resulting phase shifts which are zero or equal to pi with a tolerance, between a signal emitted by the reference antenna of the reference object (APPR) to a test reader and a signal received from the test reader at said reference antenna,

   - a production (90) of said object (APP) including a storage (900) in a memory (MM) of said object of at least one indication (IND) linking these reference phase shifts to reference characteristics obtained from signals only emitted by the reference object, and
   - at the end of the production of the object, an auto-setting (901-904) by said object of the phase shift internal to this object from said at least one stored indication and at least one characteristic obtained from a signal only emitted by the object, said at least one characteristic being of the same type as the reference characteristics.

2. The method according to claim 1, wherein the reference object includes a reference controller connected to a reference antenna via a reference impedance matching circuit and together forming said reference resonant circuit, and the reference phase shifts (DPHRi) are phase shifts between signals emitted at the output of the reference controller and signals received at the input of the reference controller.

3. The method according to claim 1 or 2, wherein the reference characteristics include reference levels (NVRi) of received signals resulting from said signals only emitted by the reference object, and said at least one characteristic includes a level (NV) of a received signal resulting from said signal only emitted by the object.

4. The method according to claim 3, wherein the reference levels (NVRi) of received signals are the reference levels of signals received at the input of the reference controller and the level (NV) of a received signal resulting from said signal only emitted by the object is the level of the signal received at the input of the controller of the object.

5. The method according to claim 4, wherein the reference object is capable of operating in reader mode or in card mode, said determinations of the reference phase shifts include

   - a placement (304) of the reference object in its card mode, and for each frequency (Fi) of said frequency range, an emission (305) by the test reader of a test signal, a reception by the test reader of the response signal emitted by the reference object, and a setting (308) of the phase shift in the reference object so as to obtain at the test reader a modulation amplitude which is greater in absolute value than said threshold,
   - a placement (301) of the reference object in reader mode, and for each frequency (Fi) of said frequency range, an emission (302) by the reference object of an unmodulated signal having said frequency and a determination (303) of the reference level of the signal received by the reference controller as a result of this emission, and
- a development (310) of a correspondence relationship between the different reference level values of the received signals and the corresponding values of reference phase shifts, said stored indication being representative of said relationship.

6. The method according to claim 5, wherein said indication includes a correspondence table between the different reference level values of the received signals and the corresponding values of reference phase shifts.

7. The method according to claim 5, wherein said relationship is a straight line, and said indication includes values allowing to characterise the straight line.

8. The method according to one of claims 4 to 7, wherein the object is capable of operating in reader mode or in card mode, the auto-setting by the object comprises a placement (901) of the object in reader mode, an emission (902) by the object and of an unmodulated signal at the frequency of the resonant circuit of the object, a determination (903) of the level of the signal received by the controller of the object, and a setting (904) of the phase shift from said level and said stored indication.

9. The method according to one of the preceding claims, wherein said object includes a controller connected to an antenna via an impedance matching circuit and together forming a resonant circuit having a resonance frequency, a signal emitted by the antenna of the object being derived from an initial signal developed within the controller, and the auto-setting of the phase shift comprises an adjustment of a delay on the initial signal.

10. The method according to one of the preceding claims, wherein said object is a communication apparatus, such as a mobile phone or a tablet.

11. An object capable of contactless communication with a reader by active load modulation, comprising a controller (CMP) connected to an antenna via an impedance matching circuit and forming together a resonant circuit having a resonance frequency, a memory containing an indication resulting from the application of the method according to one of claims 1 to 10, the controller being configured to perform an auto-setting of the phase shift specific to this object in accordance with the method according to one of claims 1 to 10.

12. The object capable of contactless communication with a reader by active load modulation, said object (APP) comprising a controller (CMP) connected to an antenna (ANT2) via an impedance matching circuit (1) and forming together a resonant circuit having a resonance frequency, the object being **characterised in that** the controller is configured to cause the object to emit, in the absence of a received signal of a reader, a signal at the frequency of the resonant circuit of the object, to determine at least one characteristic (NV) obtained from said signal only emitted by the object, and perform an auto-setting of a phase shift (DPH) internal to the object from said at least one characteristic and an indication (IND) stored in a memory of the object and linking reference phase shift values to reference values of said at least one characteristic.

13. The object according to claim 12, wherein the phase shift (DPH) is a phase shift between a signal emitted at the output of the controller and a signal received at the input of the controller.

14. The object according to claim 12, wherein said at least one characteristic includes the level (NV) of the signal received at the input of the controller resulting from said signal only emitted by the object.

15. The object according to claim 14, capable of operating in reader mode or in card mode and wherein the controller (CMP) is configured to place the object in reader mode, cause the object to emit an unmodulated signal at the frequency of the resonant circuit of the object, to determine the level of the signal received at the input of the object controller, and perform a setting of the phase shift between the emitted signal and the received signal from said level of the received signal and said stored indication.

16. The object according to claim 15, wherein said indication (IND) includes a table of correspondence between different values of received signal levels and corresponding values representative of the phase shifts.

17. The object according to claim 15, wherein said indication (IND) includes parameters allowing to characterise a straight line representative of the evolution of the phase shift values as a function of received signal level values.

18. The object according to one of claims 11 to 17, wherein the controller comprises adjustable delay means (MRT) disposed on the signals emission path and setting means configured to adjust the value of the delay so as to obtain the desired phase shift.

19. The object according to one of claims 11 to 18, wherein the controller (CMP) is a controller compatible with a near field communication technology.

20. The object according to one of claims 11 to 19, being a communication apparatus, such as a mobile phone or a tablet.

EP 3 561 730 B1

# FIG.1

# FIG.2

# FIG.3

## FIG.5

## FIG.6

## FIG.4

niveau
signal reçu

NVRi

13    13,2    13,4    13,6    13,8    14    fréquences
Fi (MHz)

## FIG.7

Décalage
de phase

DPHRi

13    13,2    13,4    13,6    13,8    14    fréquences
Fi (MHz)

## FIG.8

DPHRi

LCR

DR

NVRi

# FIG.9

Production de l'objet

Stockage IND dans mémoire MM de l'objet APP

APP — MM IND(LKT)

Placement APP en mode lecteur

Emission du signal non modulé par l'objet

Détermination niveau NV du signal reçu

NV

Détermination décalage de phase /retard

IND — MM

DPH

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2500840 A1